# EUROPEAN PATENT SPECIFICATION

(11) **EP 1 670 892 B1**
(45) Date of publication and mention of the grant of the patent: **30.11.2016**
(21) Application number: 04773739.0
(22) Date of filing: 06.10.2004
(51) Int. Cl.: C12G 1/02, C12G 1/04

(54) **PROCESS FOR PRODUCING CONCENTRATED GRAPE JUICE AND WINE**
VERFAHREN ZUR HERSTELLUNG VON KONZENTRIERTEM TRAUBENSAFT UND WEIN
PROCEDE DE PRODUCTION DE JUS DE RAISIN CONCENTRE ET DE VIN

(30) Priority: 07.10.2003 JP 2003347989
(43) Date of publication of application: 21.06.2006
(60) Divisional application: 09155693.6
(73) Proprietor: Suntory Holdings Limited, Kita-ku, Osaka-shi, Osaka 530-8203 (JP)
(72) Inventor: KUROKAWA, Mihoko c/o Suntory Products Development Center, Kanagawa-ken 211-0067 (JP); SHINODA, Kentaro, Kofu-shi, Yamanashi 400-0064 (JP); KOMURA, Hajime, Shimamoto-cho, Mishima-gun Osaka 618-002 (JP); TAKATANI, Toshihiko, Tsurumi-ku, Osaka-shi Osaka 538-0052 (JP)
(74) Representative: Vossius & Partner Patentanwälte Rechtsanwälte mbB
(86) International application number: PCT/JP2004/015177
(87) International publication number: WO 2005/035710

(56) References cited:
- DE-A- 2 636 588
- DE-A- 3 501 787
- FR-A- 2 199 554
- US-A- 5 071 664
- US-A- 5 176 929
- US-A1- 2003 165 592
- DATABASE FSTA [Online] INTERNATIONAL FOOD INFORMATION SERVICE (IFIS), FRANkFURT-MAIN, DE; ZIMA D: "Manufacture of non-alcoholic beverage from grapes." XP002310618 Database accession no. 75-4-12-h1932 & ZIMA, D.: "Manufacture of non-alcoholic beverage from grapes." VINOHRAD, vol. 12, no. 10, 1974, pages 244-245,
- DATABASE WPI Section Ch, Week 199239 Derwent Publications Ltd., London, GB; Class D16, AN 1992-321592 XP002310619 & SU 1 685 987 A1 (FOOD IND CORRESPONDENCE INST) 23 October 1991 (1991-10-23)

## Description

The present invention relates to a process for producing a concentrated grape juice which is a raw material for a wine, and a process for producing a wine having a better flavor by using a concentrated grape juice. The wine obtainable by the process of the invention is also claimed.

Conventionally, as one of processes for producing a wine, there is a process using a grape juice obtained by crushing and pressing a raw material grape, concentrating by heat the resulting raw material juice (hereinafter referred to, as concentrated grape juice) . Since in a wine which is brewed from such a concentrated grape juice (hereinafter referred to as must wine in some cases), a raw material juice can be stored, a wine can be brewed regardless of grape harvesting time. In Japan, a concentrated grape juice is also utilized for producing a wine, depending on demand.

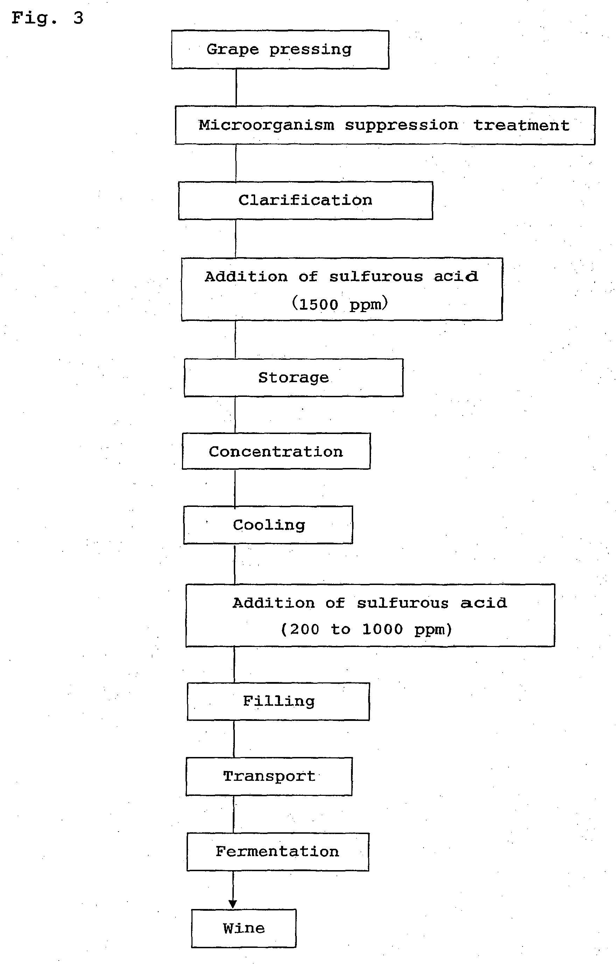

Conventionally, a flowchart of producing a must wine is shown in Fig. 3 in detail and, in brief, roughly consists of (1) a step of crushing a grape, pressing this to obtain a juice, and suppressing a microorganism, (2) a step of storing the grape juice, (3) a step of concentrating the stored grape juice and transporting the concentrated grape juice, and (4) a step of diluting the concentrated grape juice, and fermenting this to produce a wine. In the process of suppressing a microorganism in grape juice, storage, and transportation after concentration, a sulfurous acid gas is bubbled through, or a sulfite salt is added to a grape juice before concentration and a concentrated grape juice in order to prevent fermentation by wild yeast in a grape fruit, suppress the growth of a microorganism which causes abnormal fermentation, and prevent oxidation of components in a grape juice. A concentration of sulfurous acid to be added is , in terms of sulfurous acid, less than about 200 ppmat treatment of suppressing a microorganism, and about 1200 ppm or more for the term of storage, of unconcentrated grape juice and sulfurous acid is added to a concentrated grape juice to about 200 to about 1000 ppm.

This is because since a grape juice was thought to be easily degraded when stored after concentration, storage was performed before concentration of a grape juice in view of production management as described above. That is, there was adopted a method that a grape juice is stored without concentration, and a grape juice is concentrated as necessary.

Therefore, after for example. 1200 ppm or more of sulfurous acid are added to a grape juice, a grape juice is stored for a long term before concentration. As used herein, storage refers to storage in the state where no temperature control is performed, usually, at 0 to 50°C.

In addition, for maintaining stability during storage and transport of a grape juice, a large amount of sulfurous acid or salt thereof is added at a high concentration to a concentrated grape juice, in particular, an imported concentrated grape juice used for producing a wine. For this reason, a wine which was brewed from a concentrated grape juice with a high concentration of sulfurous acid added has a defect that a flavor is deteriorated (has an unpleasant flavor).

In order to reduce such the unpleasant flavor, a method of storing a must wine at a constant temperature for a constant term after production, has conventionally been performed.

In addition, an attempt to remove sulfurous acid from a. concentrated grape juice as a raw material for a wine has been tried before fermentation and, as a method of doing so, treatment with aqueous hydrogen peroxide, carbon dioxide gas, anion-exchange resin, or active carbon is known. However, by the aforementioned method, a part of total unpleasant smell is only reduced, and the unpleasant smell can not be removed sufficiently.

As other method, there is a method of subjecting a diluted concentrated grape juice to electrodialysis using an ion-exchange membrane to remove substances responsible for unpleasant smell, and fermenting this to produce a must wine. According to this method, when compared with a method using aqueous hydrogen peroxide, carbon dioxide gas or anion-exchange resin, removal of sulfurous acid and suppression of production of a tartar can be performed more effectively (e.g. JP-B No.60-43115).

However, even by this method, unpleasant smell can not be sufficiently removed, and a part of a comfortable flavor of a must wine is damaged depending on the extent of treatment.

US 2003/165592 A1 provides a method of rendering wine heat-stable which comprises providing a fermentable material which is subsequently processed to produce wine; and adding to at least one of the fermentable material or wine produced therefrom, prior to bottling the wine, a protease that will hydrolyze proteins that cause heat-induced protein haze or precipitate.

Vinohrad, vol. 12, no. 10, 1974, pages 244-245, provides a method for manufacturing a non-alcoholic beverage from grapes.

FR 2.199.554 A1 provides a process for the treatment of discolored must, characterized in that, before it passes to the press, the crop of grapes which has been sulfited, is subjected to a cold maceration, wherein the resulting must of said maceration is directed to a concentrator or stored after further sulfiting.

An object of the present invention is to provide a process for producing a wine having little unpleasant smell derived from added sulfurous acid.

A further object of the present invention is to provide a process for producing a concentrated grape juice as wine raw material.

Another object of the present invention is to provider a wine excellent in flavor.

The present inventors thought that the sulfurous acid to be added to a grape juice is added in view of necessity to stabilize a grape juice, chemical reactions occur between high concentrated sulfurous acid and components of a grape juice during storage of a grape juice, and the reaction products become precursors of sulfur-containing compounds which are substances responsible for unpleasant flavor of a must wine.

Then, the present inventors found that the conventional step of storing a pressed grape juice without concentration, in particular, bubbling of a sulfurous acid gas or addition of a sulfite salt in the step influences adversely on a flavor of a wine after fermentation, and found that by adding no sulfurous acid gas or no sulfite salt to a pressed grape juice before concentration or, if added, adding it at a smaller amount than the conventional concentration which was thought to be necessary for stabilizing a grape juice before concentration, and adding a sulfurous acid gas or a sulfite salt necessary for stabilization to a grape juice after concentration at a sufficient amount for the stabilization, a grape juice having a better flavor can be produced, and further continued the study, resulting in completion of the present invention.

That is, the present invention relates to:
(1) a process for producing a concentrated grape juice as a wine raw material, which comprises:
   (i) a pressing step of pressing a grape fruit to obtain a juice,
   (ii) a concentration step of concentrating the pressed grape juice,
   (iii) a step of bubbling a sulfurous acid gas through or adding a sulfite salt to the concentrated grape juice, and
   (iv) a step of storing the concentrated grape juice with a sulfurous acid gas bubbled therethrough or with a sulfite salt added thereto, at a temperature of 20°C or lower, wherein the process does not comprise a step of bubbling a sulfurous acid gas or adding a sulfite salt at an amount for stabilizing a stored fruit juice before concentration of the pressed grape juice;
(2) a process for producing a wine, which comprises:
   (i) a pressing step of pressing the grape fruit to obtain a juice,
   (ii) a concentration step of concentrating the pressed grape juice,
   (iii) a step of bubbling a sulfurous acid gas through or adding a sulfite salt to the concentrated grape juice,
   (iv) a step of storing the concentrated grape juice with a sulfurous acid gas bubbled therethrough or with a sulfate salt added thereto, at a temperature of 20°C or lower; and
   (v) a step of diluting the concentrated grape juice which has been stored at a temperature of 20°C or lower, and fermenting the resulting wine raw material,
   wherein the process does not comprise a step of bubbling a sulfurous acid gas or adding a sulfate salt at an amount for stabilizing a stored juice before concentration of the pressed grape juice, and
(3) a wine, which is obtainable the process as defined in (2).

Preferred embodiments are described in the dependent claims.

In the present invention; a concentrated grape juice refers to a juice obtained by concentrating a liquid from grape pressing by means such as heating or evacuation, to a sugar concentration of 40% or higher, preferably 60% or higher.

A wine produced by the present process can considerably suppress unpleasant flavor derived from sulfur-containing compounds, which could not be conventionally suppressed sufficiently by any means or invention, and a wine of excellent quality having a rich fruit-like flavor can be obtained.

In addition, according to the process of the present invention, a sulfurous acid gas or a sulfite salt is added to a produced concentrated grape juice, but a ratio of a concentration of free sulfurous acid relative to total sulfureous acid is high.
Fig. 1 is a flowchart showing a process for producing must wine in accordance with one embodiment of the present invention;
Fig. 2 is a graph showing an amount of sulfur-containing compounds in wine produced in Example; and
Fig. 3 is a flowchart showing the conventional process for producing a must wine.

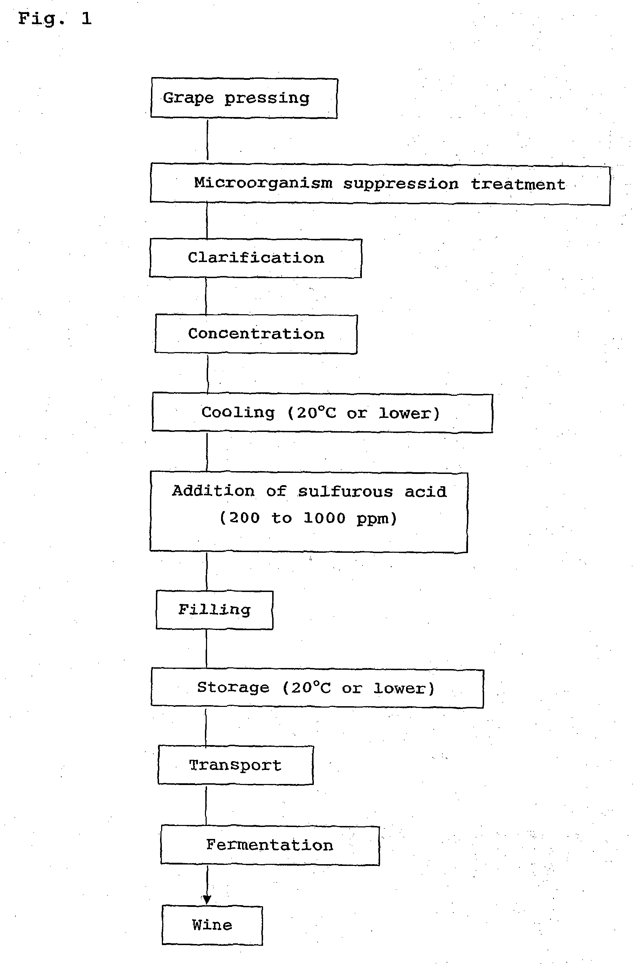

One preferable embodiment of the present invention will be explained below based on Fig. 1. Fig. 1 shows a flowchart of producing wine of the present embodiment.

As shown in the same figure, the process for producing wine of the present invention is as follows:
(a) First, a grape is crushed and pressed (pressing step), and microorganism suppression treatment for the unconcentrated grape juice is performed by bubbling a sulfurous acid gas through and/or adding a sulfite salt to (hereinafter, simply referred to as addition of sulfurous acid or the lire in some cases) a grape juice from pressing (microorganism suppression treatment step).
   Examples of a sulfite salt to be added include potassium metabisulfite and sodium metabisulfite. A content of sulfurous acid in a microorganism suppression treatment step is sufficient as far as growth of a microorganism including yeast can be suppressed in a grape juice. A sulfurous acid gas or a sulfite salt may be added to a concentration of usually less than 200 ppm, preferably 20 to 60 ppm as sulfurous acid. Addition of sulfurous acid or the like for the aforementioned microorganism suppressed treatment may be performed at crushing of a grape or at a pressing step.
   The aforementioned microorganism suppression treatment is for preventing change in components in a juice due tb growth of microorganisms such as various wild type yeasts, tactic acid bacteria, and acetic acid bacteria attached to a raw material grape. For this reason, treatment is not particularly limited to a method of addition of sulfurous acid or the like as far as it is a method of suppressing the growth of microorganisms including yeast. For example, cooling or filtration may be used.
(b) In the present invention, a grape juice from pressing is clarified, and the supernatant is concentrated by heating (concentration step), and cooled. Concentration may be performed to the same extent as that described above. The supernatant is cooled to 20°C or lower, preferably 10 to 20°C. Subsequently, in order to stabilize a concentrated grape juice during storage by preventing abnormal fermentation of a concentrated grape juice during storage or change of a concentrated grape juice due to oxidation, a sulfurous acid gas is bubbled therethrough and/or a sulfite salt is added thereto. Thereupon, a sulfite salt to be used is potassium metabisulfite or sodium metabisulfite as described (a). A concentration of sulfurous acid is 200 ppm or higher, preferably 200 to 1000 ppm, more preferably 300 to 800 ppm, particularly preferably 400 to 600 ppm in terms of sulfurous acid.
(c) The thus produced concentrated grape juice is filled into a tank, etc. , and is stored at a temperature of 20°C or lower. or preferably 10 to 20°C until transport.
(d) A concentrated grape juice which has been stored is transported, and diluted to obtain wine raw material, which is fermented to obtain must wine.

A kind of sulfurous acid or the like to be added to a pressed grape juice and a concentrated grape juice is not limited to the aforementioned sulfite salt.

Further, grape-pressing condition for carrying out the present invention is sufficient as far as it is suitable for various conditions and varieties in country of origin. As concentration condition, for example, heating concentration or concentration under reduced pressure can be appropriately selected and utilized as far as a sugar concentration of a grape liquid from pressing can be enhanced to 40% or higher.

As described above, a grape juice as wine raw material is stored at a temperaturer of 20°C or lower after concentration. And, addition of sulfurous acid for stabilizing an unconcentrated grape juice at storage (including at transport) is performed after concentration of a grape juice and immediately before storage of a grape juice. That is, the present invention is characterized, in that it does not have the conventionally known step of adding sulfurous acid or the like to a pressed grape juice at an amount for stabilizing an unconcentrated juice under storage, before concentration. Herein, an, amount for stabilizing a juice under storage is an amount which is equivalent to or more than a content of sulfurous acid for stabilizing storage of the above concentrated grape juice. Specifically, the amount is usually an amount of 200 ppm or higher, more specifically 200 to 2000 ppm in terms of sulfurous acid when sulfurous acid or the like is added to a grape juice under storage before concentration.

The aforementioned stabilization of a grape juice and a concentrated grape juice includes not only prevention of fermentation by yeast in a grape juice, and suppression of the growth of microorganisms causing abnormal fermentation, but also prevention of oxidative degeneration and deterioration of components in a grape juice.

Since in the concentrated grape juice, a concentration of sulfurous acid to be added to the concentrated grape juice is as described above, a concentration of sulfurous acid in a produced concentrated grape juice is in the aforementioned concentration range in terms of sulfurous acid, that is, in a range of usually 200 to 1000 ppm, preferably 300 to 800 ppm, more preferably 400 to 600 ppm.

Further, the concentrated grape juice can be obtained as a product having a higher concentration of free sulfurous acid in the concentrated grape juice than that of the concentrated grape juice produced by the conventional process, by concentrating a grape juice immediately after grape pressing, adding sulfurous acid or the like under a low temperature, and storing this under a low temperature.

According to the process of the invention, a ratio of a concentration of free sulfurous acid relative to that of total sulfurous acid in the concentrated grape juice produced by the present invention is usually 30% or higher.

As usedherein, total sulfurous acid is a sum of free sulfurous acid present in a concentrated grape juice and sulfurous acid bound with acetaldehyde or other compounds.

Wine having a better flavor can be produced by adjusting the concentrated grape juice obtained by the present process to a fermentation optimal concentration, and performing fermentation as in the conventional wine production, that is, adding starter yeast, performing fermentation to obtain wine and, thereafter, performing racking and a clarification step such as clarification filtration using diatomaceous earth. In the present process for producing wine, fermentation condition and a clarification method are not particularly limited. For example, it is preferable to use yeast which is generally used for producing wine as starter yeast used in fermentation. Examples of such the yeast include Saccharomyces cerevisiae.

The present invention will be explained in more detail by way of the following Examples together with the conventionally known Comparison Examples, but the following Examples merely show one example of the invention. The scope of the present invention is not limited by the following Examples at all.

### Example

### 1) Preparation of sample wine

Concentrated grape juice A-1: A grape juice A (about 1200 mL) immediately after pressing was immediately heated and concentrated with a rotary evaporator using a warm bath of 70 to 80°C under reduced pressure (40 to 50 mmHg) without adding sulfurous acid, to about 4-fold in volume and to a sugar level of 60% or higher, thereby to obtain about 300 mL of a concentrated grape juice A-1.

Concentrated grape juice A-2: A half amount of the aforementioned concentrated grape juice A-1 was placed at 12°C, and potassium metabisulfite (1.04 g/L) was added to a total sulfurous acid concentration of 600 ppm, thereby to obtain about 150 ml of the concentrated grape juice A-2.

Concentrated grape juiceA-3 (Reference Example): Potassiummetabisulfite (1.04 g/L) was added to a grape juice A (about 600 mL) to a total sulfurous acid concentration of 600 ppm,and the juice was filled into a closed glass container, stored at 50°C for 3 days, heated and concentrated using a warm bath of 70 to 80°C under reduced pressure (40 to 50 mmHg) to about 4-fold in volume and to a sugar level of 60% or higher. Potassium metabisulfite was adjusted so that a total sulfurous acid concentration in a concentrated grape juice became 600 ppm, thereby to obtain about 150 mL of the concentrated grape juice A-3.

The concentrated grape juices A-1, A-2 and A-3 were each fermented according to the conventional method to obtain wine a-1 from the concentrated grape juice A-1, wine a-2 from the concentrated grape juice A-2, and wine a-3 from the concentrated grape juice A-3.

### 2) Organoleptic evaluation

The fermented wines a-1, a-2 and a-3 were evaluated by 6 trained panelists according to the following scoring criteria. Scoring criteria:
Very intense unpleasant smell: -2
Weak unpleasant smell: -1
Little unpleasant: 0
No unpleasant smell: 1

Results are shown in Table 1. Organoleptic evaluation (score) shows an average of 6 panelists. In the wine (a-3) produced by the conventional process, unpleasant smell was very intense, while in the wine (a-2) produced by the present invention, little unpleasant smell was perceived, and there is a slight difference between no addition of sulfurous acid.

**Table 1**

| | Organoleptic evaluation (score) |
|---|---|
| a-1 | +0.8 |
| a-2 | 0.0 |
| a-3 | -2.0 |

### 3) Sulfur-containing compounds in wine

10mL of each wine (a-1, a-2 , a-3) was liquid-liquid extracted with methylene chloride (100 mL)), and concentrated 100-fold, and sulfur-containing compounds were detected with a chemical emission sulfur detector (SCD) using gas chromatography (GC), to determine a total amount of sulfur-containing compounds by integration of peak signal values of detected compounds.

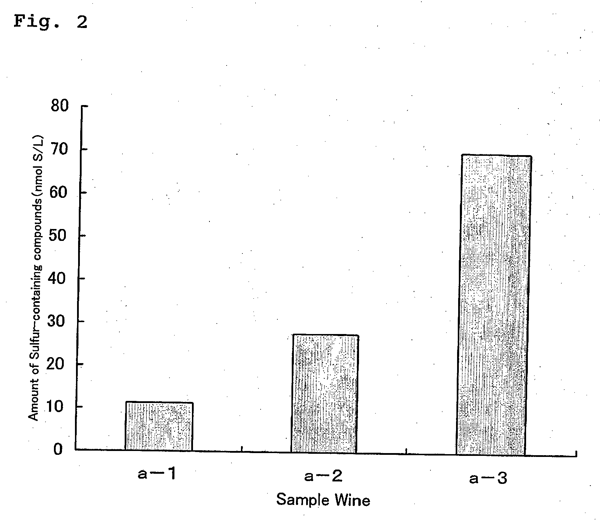

Results are shown in Fig. 2. As compared with the wine (a-1) produced by no addition of sulfurous acid, about 2.4-fold amount of sulfur-containing compounds were detected in the wine (a-2) produced by the present invention. On the other hand, in the wine (a-3) produced by the conventional process, a sulfurous acid concentration before fermentation was approximately the same as that of the wine (a-2) produced by the present invention, but sulfur-containing compounds were increased to about 6. 2-fold of the wine (a-1).

### 4) Measurement of free sulfurous acid and total sulfurous acid in concentrated grape juice

Measurement was carried out according to the methods described in The Annotation of Official Methods of Annalysis of National Tax Administration Agency, Japan, 4^{th} ed.

Results are shown in Table 2. A concentration of free sulfurous acid in the concentrated grape juice (A-2) of the present invention was about 2- to 5-fold as compared with the concentrated grape juice (A- 3) produced by the conventional grape juice. In addition, a ratio of a concentration of free sulfurous acid relative to that of total sulfurous acid in the concentrated grape juice (A-2) of the present invention was 30% or higher, and this is at least 2-fold or more of the concentrated grape juice (A-3) produced by the conventional process.

**Table 2**

| | Free sulfurous acid (ppm) | Total sulfurous acid (ppm) | Free sulfurous acid / total sulfurous acid (%) |
|---|---|---|---|
| A-2 | 196 | 525 | 37.3 |
| | 216 | 523 | 47.3 |
| | 259 | 547 | 41.3 |
| A-3 | 5.2 | 503 | 10.3 |
| | 88 | 460 | 19.1 |
| | 79 | 465 | 17.0 |
| | 93 | 467 | 19.9 |

The process for producing a concentrated grape juice and the process for producing a wine of the present invention are useful as a process for producing must wine having a better flavor.

## Claims

1. A process for producing a concentrated grape juice as wine raw material comprising:
(1) a pressing step of pressing a grape fruit to obtain a juice,
(2) a concentration step of concentrating the pressed grape juice,
(3) a step of bubbling a sulfurous acid gas through or adding a sulfite salt to the concentrated grape juice, and
(4) a step of storing the concentrated grape juice with a sulfurous acid gas bubbled therethrough or with a sulfite salt added thereto, at a temperature of 20°C or lower,
wherein the process docs not comprise a step of bubbling a sulfurous acid gas or adding a sulfite salt at an amount for stabilizing a stored fruit juice before concentration of the pressed grape juice.

2. The process for producing a concentrated grape juice as wine raw material according to claim 1, further comprising a microorganism suppression treatment step between the pressing step (1) and the concentration step (2).

3. The process for producing a concentrated grape juice as wine raw material according to claim 1 or 2, wherein the sulfurous acid gas is bubbled through or the sulfite salt is added to the concentrated grape juice so as to achieve a concentration of 200 to 1000 ppm in terms of sulfurous acid.

4. The process for producing a concentrated grape juice as wine raw material according to any of claims 1 to 3, wherein the concentrated grape juice is stored at 10 to 20°C.

5. A process for producing wine comprising:
(1) a pressing step of pressing a grape fruit to obtain a juice,
(2) a concentration step of concentrating the pressed grape juice,
(3) a step of bubbling a sulfurous acid gas through or adding a sulfite salt to the concentrated grape juice,
(4) a step of storing the concentrated grape juice with a sulfurous acid gas bubbled therethrough or with a sulfite salt added thereto, at a temperature of 20°C or lower, and
(5) a step of diluting the concentrated grape juice which has been stored at a temperature of 20 °C or lower, and fermenting the resulting wine raw material,
wherein the process does not comprise a step of bubbling a sulfurous acid gas or adding a sulfite salt at an amount for stabilizing a stored juice before concentration of the pressed grape juice.

6. The process for producing a wine according to claim 5, further comprising a step of microorganism suppression treatment between the pressing step (1) and the concentration step (2).

7. The process for producing a wine according to claim 5 or 6, wherein the sulfurous acid gas is bubbled through or the sulfite salt is added to the concentrated grape juice so als to achieve a concentration of 200 to 1000 ppm in terms of sulfurous acid.

8. The process for producing a wine according to any of claims 5 to 7, wherein the concentrated grape juice is stored at 10 to 20°C.

9. A wine which is obtainable by the process as defined in claim 7.

## Patentansprüche

1. Ein Verfahren zur Herstellung eines konzentrierten Traubensafts als Weinausgangsmaterial, umfassend:
(1) einen Pressschritt des Pressens einer Traubenfrucht, um einen Saft zu erhalten,
(2) einen Konzentrationsschritt des Konzentrierens des gepressten Traubensafts,
(3) einen Schritt des Sprudelns eines schwefligen Säuregases durch den konzentrierten Traubensaft oder Hinzufügens eines Sulfitsalzes zu dem konzentrierten Traubensaft, und
(4) einen Schritt des Lagerns des konzentrierten Traubensafts, durch den schwefliges Säuregas gesprudelt wurde oder zu dem Sulfitsalz zugegeben wurde, bei einer Temperatur von 20°C oder weniger,
wobei das Verfahren weder einen Schritt des Sprudelns von schwefligem Säuregas noch des Hinzufügens eines Sulfitsalzes in einer Menge, um einen gelagerten Fruchtsaft zu stabilisieren, vor dem Konzentrieren des gepressten Traubensaftes umfasst.

2. Das Verfahren zur Herstellung eines konzentrierten Traubensafts als Weinausgangsmaterial nach Anspruch 1, weiter umfassend einen Behandlungsschritt zum Unterdrücken von Mikroorganismen zwischen dem Pressschritt (1) und dem Konzentrationsschritt (2).

3. Das Verfahren zur Herstellung eines konzentrierten Traubensafts als Weinausgangsmaterial nach Anspruch 1 oder 2, wobei entweder das schweflige Säuregas durch den konzentrierten Traubensaft gesprudelt oder das Sulfitsalz zum konzentrierten Traubensaft hinzugefügt wird, um eine Konzentration von 200 bis 1000 ppm, bezogen auf die schweflige Säure, zu erreichen.

4. Das Verfahren zur Herstellung eines konzentrierten Traubensafts als Weinausgangsmaterial nach einem der Ansprüche 1 bis 3, wobei der konzentrierte Traubensaft bei 10 bis 20°C gelagert wird.

5. Ein Verfahren zur Herstellung eines Weins, umfassend:
(1) einen Pressschritt des Pressens einer Traubenfrucht, um einen Saft zu erhalten,
(2) einen Konzentrationsschritt des Konzentrierens des gepressten Traubensafts,
(3) einen Schritt des Sprudelns eines schwefligen Säuregases durch den konzentrierten Traubensaft oder Hinzufügens eines Sulfitsalzes zu dem konzentrierten Traubensaft,
(4) einen Schritt des Lagerns des konzentrierten Traubensafts, durch den schwefliges Säuregas gesprudelt wurde oder zu dem Sulfitsalz zugegeben wurde, bei einer Temperatur von 20°C oder weniger,
(5) einen Schritt des Verdünnens des konzentrierten Traubensafts, der bei einer Temperatur von 20°C oder weniger gelagert wurde, und Fermentieren des resultierenden Weinausgangsmaterials,
wobei das Verfahren weder einen Schritt des Sprudelns von schwefligem Säuregas noch des Hinzufügens eines Sulfitsalzes in einer Menge, um einen gelagerten Fruchtsaft zu stabilisieren, vor dem Konzentrieren des gepressten Traubensaftes umfasst.

6. Das Verfahren zur Herstellung eines Weins nach Anspruch 5, weiter umfassend einen Behandlungsschritt zum Unterdrücken von Mikroorganismen zwischen dem Pressschritt (1) und dem Konzentrationsschritt (2).

7. Das Verfahren zur Herstellung eines Weins nach Anspruch 5 oder 6, wobei entweder das schweflige Säuregas durch den konzentrierten Traubensaft gesprudelt oder das Sulfitsalz zum konzentrierten Traubensaft hinzugefügt wird, um eine Konzentration von 200 bis 1000 ppm, bezogen auf die schweflige Säure, zu erreichen.

8. Das Verfahren zur Herstellung eines Weins nach einem der Ansprüche 5 bis 7, wobei der konzentrierte Traubensaft bei 10 bis 20°C gelagert wird.

9. Ein Wein, welcher durch das Verfahren nach Anspruch 7 erhältlich ist.

## Revendications

1. Procédé de production de jus de raisin concentré à titre de matière première de vin comprenant :
(1) une étape de pressage consistant à presser du raisin pour obtenir un jus,
(2) une étape de concentration consistant à concentrer le jus de raisin pressé,
(3) une étape de barbotage d'acide sulfureux gazeux, ou d'ajout d'un sel de sulfite dans le jus de raisin concentré, et
(4) une étape de stockage du jus de raisin concentré dans lequel de l'acide sulfureux gazeux a barboté ou auquel un sel de sulfite a été ajouté, à une température de 20 °C ou moins,
dans lequel le procédé ne comprend pas d'étape de barbotage d'acide sulfureux gazeux ou d'ajout d'un sel de sulfite en une quantité apte à stabiliser un jus de fruit stocké avant concentration du jus de raisin pressé.

2. Procédé de production de jus de raisin concentré à titre de matière première de vin selon la revendication 1, comprenant en outre une étape de traitement de type suppression des micro-organismes entre l'étape de pressage (1) et l'étape de concentration (2).

3. Procédé de production de jus de raisin concentré à titre de matière première de vin selon la revendication 1 ou 2, dans lequel l'acide sulfureux gazeux est mis à barboter ou le sel de sulfite est ajouté dans le jus de raisin concentré de façon à obtenir une concentration de 200 à 1000 ppm en termes d'acide sulfureux.

4. Procédé de production de jus de raisin concentré à titre de matière première de vin selon l'une quelconque des revendications 1 à 3, dans lequel le jus de raisin concentré est stocké à 10-20 °C.

5. Procédé de production de vin comprenant :
(1) une étape de pressage consistant à presser du raisin pour obtenir un jus,
(2) unie étape de concentration consistant à concentrer le jus de raisin pressé,
(3) une étape de barbotage d'acide sulfureux gazeux ou d'ajout d'un sel de dans le jus de raisin concentré,
(4) une étape de stockage du jus de raisin concentré dans lequel de l'acide sulfureux gazeux a barboté ou auquel un sel de sulfite a été ajouté, à une température de 20 °C ou moins, et
(5) une étape de dilution du jus de raisin concentré qui a été stocké à une température de 20 °C ou moins, et de fermentation de la matière première de vin obtenue,
dans lequel le procédé ne comprend pas d'étape de barbotage d'acide sulfureux gazeux ou d'ajout d'un sel de sulfite en une quantité apte à stabiliser un jus de fruit stocké avant concentration du jus de raisin pressé.

6. Procédé de production de vin selon la revendication 5, comprenant en outre une étape de traitement de type suppression des micro-organismes entre l'étape de pressage (1) et l'étape de concentration (2).

7. Procédé de production de vin selon la revendication 5 ou 6, dans lequel l'acide sulfureux gazeux est mis à barboter ou le sel de sulfite est ajouté dans le jus de raisin concentré de façon à obtenir une concentration de 200 à 1000 ppm en termes d'acide sulfureux.

8. Procédé de production de vin selon l'une quelconque des revendications 5 à 7, dans lequel le jus de raisin concentré est stocké à 10-20 °C.

9. Vin qui peut être obtenu par le procédé selon la revendication 7.
